# FASCICULE DE BREVET EUROPEEN

(11) **EP 0 814 986 B1**
(45) Date de publication et mention de la délivrance du brevet: **14.06.2000**
(21) Numéro de dépôt: 96904893.3
(22) Date de dépôt: 22.02.1996
(51) Int. Cl.: B60T 13/52, B60T 13/57

(54) **SERVOMOTEUR DOTE D'UNE ENTREE D'AIR DIRECTE A DEBIT ADAPTATIF**
BREMSKRAFTVERSTÄRKER, AUSGESTATTET MIT EINEM DIREKTEN LUFTEINLASS MIT ANPASSUNGSFÄHIGEM DURCHFLUSS
BRAKE SERVO HAVING AN ADAPTIVE-FLOW DIRECT AIR INLET

(30) Priorité: 17.03.1995 FR 9503099
(43) Date de publication de la demande: 07.01.1998
(73) Titulaire: Bosch Systemes de Freinage, 93700 Drancy (FR)
(72) Inventeur: GAUTIER, Jean, Pierre, F-93600 Aulnay-sous-Bois (FR); VERBO, Ulysse, F-93600 Aulnay-sous-Bois (FR)
(74) Mandataire: Bentz, Jean-Paul
(86) Numéro de dépôt international: FR9600281
(87) Numéro de publication internationale: WO9629220

(56) Documents cités:
- EP-A- 0 405 603
- DE-U- 9 005 629
- GB-A- 2 247 502

## Description

La présente invention concerne un servomoteur pneumatique de freinage utilisant des première et seconde sources de pression d'air délivrant des première et seconde pressions respectives et différentes, ce servomoteur comprenant : une enveloppe rigide ; au moins une cloison mobile étanche séparant l'enveloppe rigide en au moins une première et une seconde chambres ; un piston pneumatique au moins partiellement cylindrique coulissant de façon étanche dans l'enveloppe et délimitant un volume interne ; un clapet porté par le piston pneumatique et logé dans le volume interne ; un filtre d'épuration interposé entre la seconde source et le volume interne ; au moins une première voie d'admission d'air formée par un passage qui fait communiquer la seconde chambre avec la seconde source de pression ; des moyens d'obturation à ouverture sélective, installés sur la première voie d'admission d'air ; et des moyens élastiques associés aux moyens d'obturation ; la première chambre étant reliée à la première source, la seconde chambre étant susceptible d'être sélectivement reliée, au moyen du clapet, à l'une quelconque des deux sources, et la cloison mobile étant susceptible d'être sollicitée par une différence de pression, provoquée par un actionnement du clapet, entre les pressions fournies aux chambres, pour entraîner le piston pneumatique.

Un dispositif de ce type est décrit dans le document EP-A-405 603.

Malgré le caractère traditionnel des techniques concernées, les servomoteurs continuent de faire l'objet de recherches importantes, visant à en optimiser la caractéristiques de fonctionnement.

Au nombre de ces recherches figurent notamment des tentatives pour réduire à la fois le niveau sonore en fonctionnement des servomoteurs et leur temps de réponse à la suite d'une sollicitation, la réduction simultanée de ces deux paramètres étant rendue très délicate par le fait qu'un servomoteur est d'autant plus silencieux que l'air qu'il admet dans la chambre arrière est plus filtré, alors qu'il présente un temps de réponse d'autant plus court que l'air qu'il admet est moins filtré.

A ce titre, les moyens divulgués par le document précité EP-A-405 603 pour réduire le temps de réponse du servomoteur décrit s'avèrent impropres à résoudre ce compromis, le niveau sonore et le temps de réponse obtenus étant tous deux intimement et irrémédiablement dépendants du choix du filtre d'épuration monté à l'entrée du servomoteur

Par ailleurs, des études statistiques ayant montré que les collisions entre véhicules pourraient être évitées en proportion non négligeable par un freinage moins hésitant de la part des conducteurs, la conception des systèmes de freinage actuels tend à reconnaître la nécessité de pallier les effets d'une éventuelle hésitation du conducteur au moment du freinage.

L'invention se situe dans ce contexte, et a pour but de proposer un servomoteur qui réponde à l'attente du public pour ce qui concerne la réduction du niveau sonore en fonctionnement, tout en offrant un temps de réponse au moins aussi satisfaisant que ceux des servomoteurs de l'art antérieur, dans tous les cas où le besoin d'un temps de réponse court se fait sentir, et en offrant une sécurité accrue de freinage.

A cette fin, le servomoteur de l'invention est essentiellement caractérisé en ce que la première voie d'admission d'air évite la traversée du filtre et du clapet, en ce que les moyens d'obturation sont installés entre la seconde source de pression et le volume interne du piston pneumatique et en ce que les moyens élastiques sont sensibles à une chute de pression apparaissant, entre une partie au moins du volume interne du piston et la seconde source de pression, pour autoriser sélectivement l'ouverture des moyens d'obturation lorsque cette chute de pression dépasse un seuil déterminé

Selon une variante possible de réalisation, le servomoteur de l'invention peut comporter en outre une seconde voie d'admission d'air formée par un passage qui fait communiquer sélectivement la seconde chambre avec la seconde source de pression à travers le clapet en évitant la traversée du filtre, cette seconde voie d'admission d'air pouvant elle-même traverser en permanence le clapet et inclure une section commune aux première et seconde voies d'admission d'air, sur laquelle sont installés les moyens d'obturation à ouverture sélective.

Dans le cas habituel où le clapet est commandé par une tige de commande, le servomoteur de l'invention est préférablement conçu de telle façon que le filtre adopte la forme d'un cylindre enserrant la tige de commande, que les moyens d'obturation comprennent un siège de valve formé à la périphérie interne du piston et un joint annulaire souple obturant un espace libre entre le filtre et le siège de valve en s'appuyant sur ce dernier, et que les moyens élastiques comprennent un ressort appliquant le joint sur le siège de valve, à l'encontre d'une force susceptible d'être exercée sur ce joint par la différence de pression entre l'intérieur du piston et la seconde source de pression.

D'autres caractéristiques et avantages de l'invention ressortiront clairement de la description qui en est faite ci-après, à titre indicatif et nullement limitatif, en référence aux dessins annexés, dans lesquels:
- la Figure 1 est une vue schématique en coupe d'un système de freinage à assistance pneumatique utilisant un servomoteur classique;
- la Figure 2 est une vue en coupe partielle d'un servomoteur conforme à un premier mode de réalisation de l'invention;
- la Figure 3 est une vue en coupe partielle d'un servomoteur conforme à un second mode de réalisation de l'invention; et
- la Figure 4 est une vue en coupe partielle d'un servomoteur conforme à un troisième mode de réalisation de l'invention.

Dans la mesure où l'invention ne concerne qu'un perfectionnement apporté aux systèmes de freinage à assistance pneumatique, et où la constitution générale et le fonctionnement de ces derniers sont bien connus de l'homme de l'art, ces systèmes ne seront rapidement rappelés ici que pour permettre une compréhension totale du perfectionnement que représente l'invention.

Schématiquement, un système de ce type comprend un servomoteur 1 et un maître-cylindre 2.

Le servomoteur comprend lui-même une enveloppe rigide 3 séparée en deux chambres 3a et 3b, de façon étanche, par une cloison mobile 4 susceptible d'entraîner un piston pneumatique 5, au moins partiellement cylindrique et mobile par rapport à l'enveloppe 3.

La chambre avant 3a, dont la face avant est fermée de façon étanche par le maître-cylindre 2, est en permanence raccordée à une source de basse pression D à travers une valve anti-retour 6.

La chambre arrière 3b est en revanche susceptible d'être sélectivement raccordée soit à la source de basse pression D, soit à une source de haute pression, par exemple à l'atmosphère A.

A cette fin, l'accès à la chambre arrière 3b est contrôlé par un clapet 7 et un plongeur 8 logés dans le piston 5, le plongeur étant relié une pédale de frein 9 par l'intermédiaire d'une tige de commande 10.

Lorsque la tige de commande 10 est en position de repos, en l'occurrence tirée vers la droite, le clapet 7 établit normalement une communication entre les deux chambres 3a et 3b du servomoteur.

La chambre arrière 3b étant alors soumise à la même dépression que la chambre avant 3a, le piston 5 est repoussé vers la droite, en position de repos, par un ressort de rappel 11.

L'actionnement du plongeur 8 par un mouvement de la tige de commande 10 (vers la gauche sur les figures) a pour effet, dans un premier temps, de déplacer le clapet 7 de façon qu'il isole l'une de l'autre les chambres 3a et 3b puis, dans un deuxième temps, de déplacer ce clapet de façon qu'il ouvre la chambre arrière 3b à la pression atmosphérique A.

La différence de pression entre les deux chambres, alors ressentie par la cloison mobile 4, exerce sur cette dernière une poussée qui tend à la déplacer vers la gauche et à lui permettre d'entraîner le piston 5 qui se déplace à son tour en comprimant le ressort 11.

L'effort de freinage exercé sur le plongeur 8 par la tige de commande 10, ou "force d'entrée", et l'effort d'assistance au freinage, ou "force d'assistance", résultant de la poussée de la cloison mobile 4, se conjuguent sur un disque de réaction 2 pour constituer une force d'actionnement transmise au maître-cylindre par l'intermédiaire d'une tige de poussée 13.

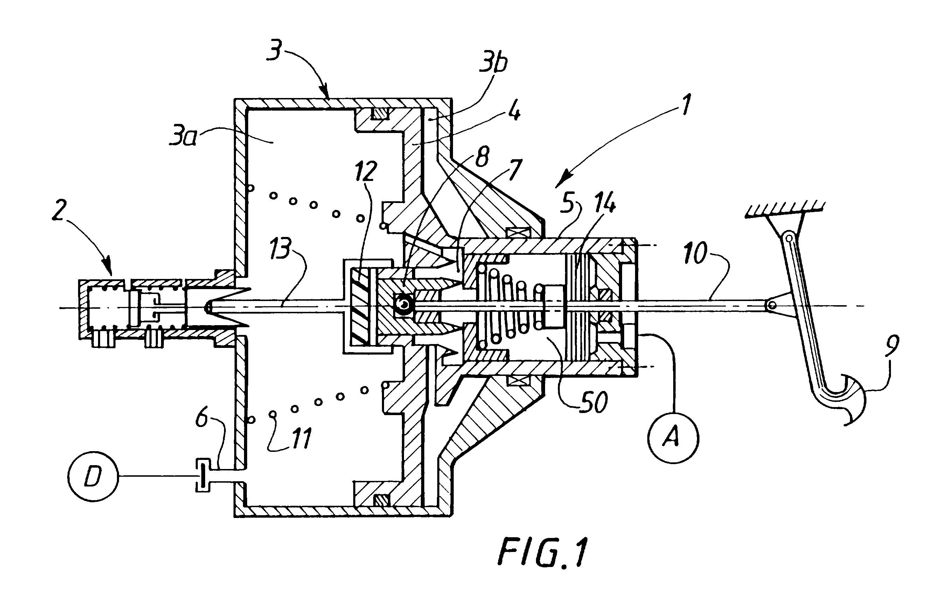

Comme le montre la Figure 1, le servomoteur comprend classiquement un filtre d'épuration 14, destiné à éviter toute pollution, par l'atmosphère A, de l'intérieur 50 du piston pneumatique, du clapet 7, et de la chambre arrière 3b.

Bien qu'un tel filtre soit nécessaire au moins pour atténuer le bruit de fonctionnement du servomoteur, il engendre un ralentissement du flux d'air utilisable par ce dernier, et dégrade le temps de réponse du servomoteur d'une façon d'autant plus sensible qu'il assure une isolation phonique importante.

Non seulement le servomoteur de l'invention remédie à ce problème, mais il permet même de tirer avantage de la présence du filtre pour accroître la sécurité du freinage.

A cette fin, le servomoteur de l'invention comporte, en plus des organes précédemment décrits (figures à 4), au moins une première voie d'admission d'air 15 formée par un passage 15a, 15b, 15c qui fait communiquer la seconde chambre 3b avec la seconde source de pression A en évitant la traversée du filtre 14 et du clapet 7; des moyens d'obturation 16, 51 à ouverture sélective, installés sur la première voie d'admission d'air 15 entre la seconde source de pression A et l'intérieur 50 du piston ; et des moyens élastiques 17, sensibles à une chute de pression entre une partie au moins de l'intérieur 50 du piston et la seconde source de pression A, pour autoriser sélectivement l'ouverture des moyens d'obturation 16 lorsque cette chute de pression dépasse un seuil déterminé.

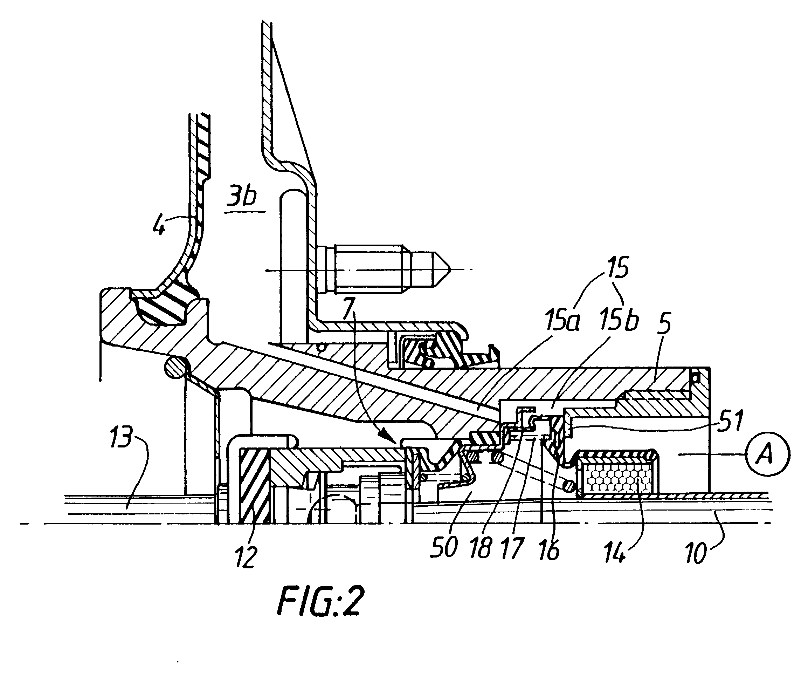

Par exemple, comme le montrent les figures 2 à 4, le filtre 14 peut adopter la forme d'un cylindre enserrant la tige de commande 10, les moyens d'obturation comprenant alors de préférence un siège de valve 51 formé à la périphérie interne du piston et un joint annulaire souple 16 obturant un espace libre entre le filtre 14 et le siège de valve 51 en s'appuyant sur ce dernier, et les moyens élastiques comprenant un ressort 17 appliquant le joint 16 sur le siège de valve 51, à l'encontre d'une force susceptible d'être exercée sur ce joint par la différence de pression entre l'intérieur 50 du piston et la seconde source de pression A.

Selon un premier mode de réalisation possible (figure 2), le servomoteur pneumatique de l'invention peut ne comporter, en plus de ce que comporte un servomoteur classique, que la première voie d'admission d'air directe 15, le clapet 7 étant isolé de cette voie 15 par un ou plusieurs organes tubulaires formant une paroi continue 18.

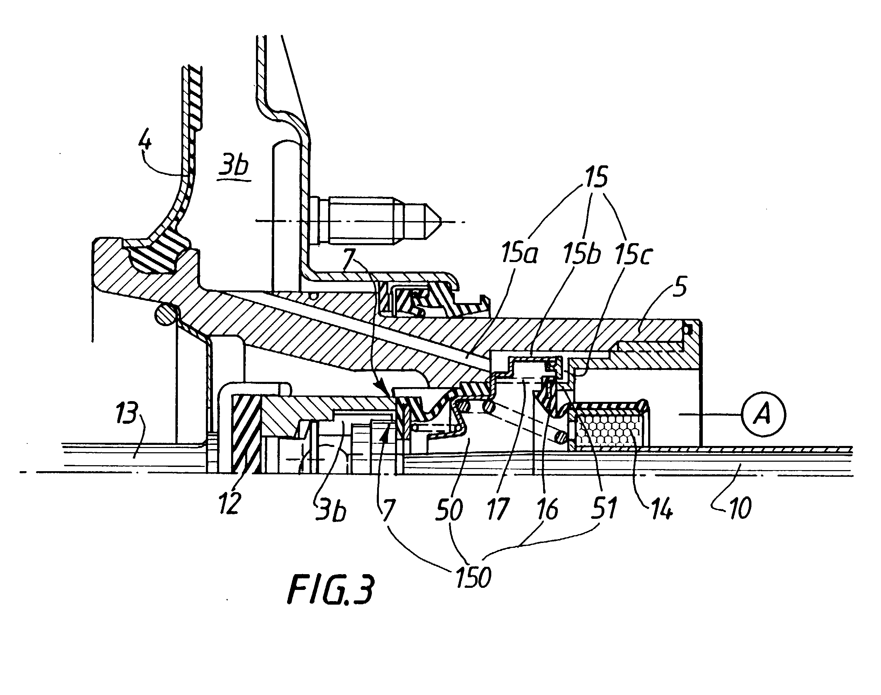

Selon un second mode de réalisation possible (figure 3), le servomoteur pneumatique de l'invention peut en revanche comporter, en plus de la première voie d'admission d'air 15, une seconde voie d'admission d'air 150 formée par un passage qui comprend le clapet 7 lorsqu'il est ouvert, l'intérieur 50 du piston 5 et l'espace entre le joint 16 et le siège de valve 51 lorsqu'il est ouvert, cette seconde voie 150 faisant ainsi sélectivement communiquer la seconde chambre 3b avec la seconde source de pression A à travers le clapet 7 en évitant la traversée du filtre 14.

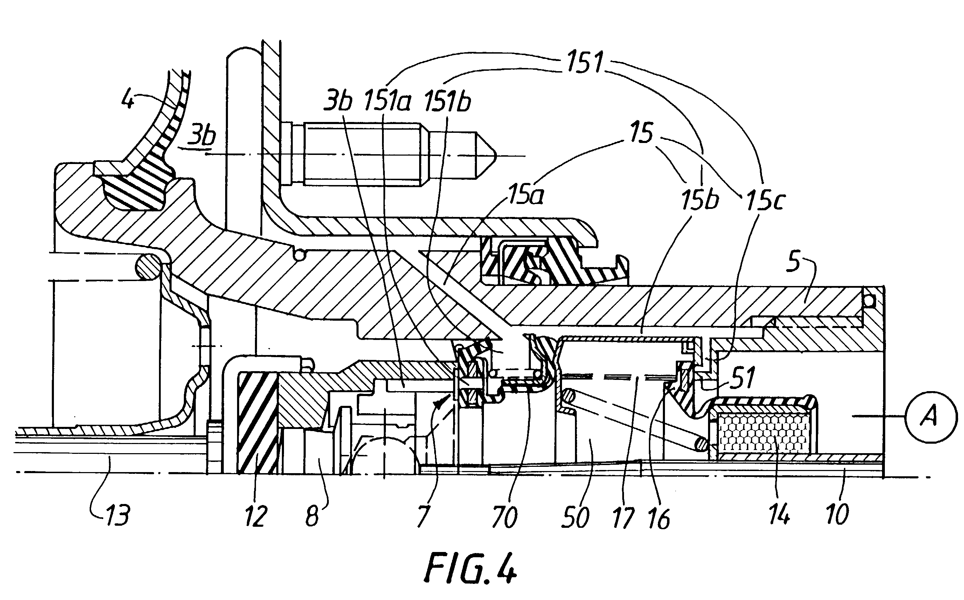

Enfin, selon un troisième mode de réalisation possible (figure 4), le servomoteur pneumatique de l'invention peut être équipé d'un clapet 7, connu en soi, dont l'organe tubulaire 70 est percé d'un orifice 151a faisant communiquer en permanence le volume externe 151b de l'organe tubulaire 70 avec la chambre arrière 3b. Ce servomoteur peut ainsi comporter, en plus de la première voie d'admission d'air 15, une seconde voie d'admission d'air 151 formée par un passage 151a, 151b, 15b, 15c qui fait communiquer sélectivement la seconde chambre 3b avec la seconde source de pression A en traversant en permanence le clapet 7 et en évitant la traversée du filtre 14, cette seconde voie 151 incluant une section 15b, 15c, commune aux première et seconde voies d'admission d'air et sur laquelle sont installés les moyens d'obturation 16, 51 à ouverture sélective.

Le fonctionnement du servomoteur de l'invention est le suivant.

Lorsque le servomoteur est sollicité de façon brusque, la force de succion exercée par la source de dépression D sur la cloison mobile 4 provoque à l'intérieur 50 du piston 5 une chute de pression instantanée importante et d'ailleurs d'autant plus forte que la résistance offerte au passage de l'air par le filtre 14 est élevée.

Dans ces conditions, le joint souple 16, dont les deux faces sont soumises à des pressions différentes, subit une force qui, si elle est supérieure à la force exercée par le ressort 17, décolle la périphérie du joint 16 du siège 51 à l'encontre de la force exercée par ce ressort et ouvre ainsi la première voie de communication d'air 15 ainsi que la seconde voie de communication d'air telle que 150, 151 lorsqu'elle existe.

Si en revanche le servomoteur est sollicité de façon progressive, la différence de pression entre l'intérieur 50 du servomoteur et la seconde source A reste modérée et la force subie par le joint souple 16 est insuffisante pour vaincre la force qu'exerce le ressort 17 sur ce joint en l'appliquant sur le siège 51.

Comme le comprendra aisément l'homme de l'art, ces dispositions permettent d'optimiser le temps de réponse et le niveau sonore de fonctionnement du servomoteur, en permettant d'obtenir un temps de réponse minimal dans les situations de freinage d'urgence qui exigent un tel temps de réponse et dans lesquelles le confort d'un faible niveau sonore est sans objet, et en réduisant le niveau sonore dans les situations dans lesquelles l'augmentation du temps de réponse due à la traversée du filtre par l'air n'est assortie d'aucune conséquence, situations dans lesquelles la sollicitation du servomoteur est de toute façon trop lente pour pouvoir tirer avantage d'un temps de réponse très court.

D'autre part, tout actionnement rapide de la pédale de frein conduit à une admission d'air directe supplémentaire dans la chambre arrière 3b à travers la première voie de communication 15, et provoque donc une augmentation automatique de l'assistance au freinage qui se traduit par une augmentation initiale de la force de freinage, quelle que soit la volonté ultérieurement manifestée par le conducteur de réduire cette force de freinage.

## Revendications

1. Servomoteur pneumatique de freinage utilisant des première et seconde sources de pression d'air (D, A) délivrant des première et seconde pressions respectives et différentes, ce servomoteur comprenant : une enveloppe rigide (3); au moins une cloison mobile étanche (4) séparant l'enveloppe rigide en au moins une première et une seconde chambres (3a, 3b) ; un piston pneumatique (5) au moins partiellement cylindrique coulissant de façon étanche dans l'enveloppe et délimitant un volume interne (50) ; un clapet (7) porté par le piston pneumatique et logé dans le volume interne (50) ; un filtre d'épuration (14) interposé entre la seconde source (A) et le volume interne (50) , au moins une première voie d'admission d'air (15) formée par un passage (15a, 15b, 15c) qui fait communiquer la seconde chambre (3b) avec la seconde source de pression (A) ; des moyens d'obturation (16, 51) à ouverture sélective, installés sur la première voie d'admission d'air (15) ; et des moyens élastiques (17) associés aux moyens d'obturation (16, 51) ; la première chambre (3a) étant reliée à la première source (D), la seconde chambre (3b) étant susceptible d'être sélectivement reliée, au moyen du clapet (7), à l'une quelconque des deux sources (D, A), et la cloison mobile étant susceptible d'être sollicitée par une différence de pression, provoquée par un actionnement du clapet, entre les pressions fournies aux chambres, pour entraîner le piston pneumatique (5), caractérisé en ce que la première voie d'admission d'air (15) évite la traversée du filtre (14) et du clapet (7), en ce que les moyens d'obturation sont installés entre la seconde source de pression (A) et le volume interne (50) du piston pneumatique, et en ce que les moyens élastiques (17) sont sensibles à une chute de pression apparaissant entre une partie au moins du volume interne (50) du piston et la seconde source de pression (A), pour autoriser sélectivement l'ouverture des moyens d'obturation (16, 51) lorsque cette chute de pression dépasse un seuil déterminé.

2. Servomoteur pneumatique suivant la revendication 1, caractérisé en ce qu'il comporte en outre une seconde voie d'admission d'air (150, 151) formée par un passage (7, 50, 16-51) qui fait communiquer sélectivement la seconde chambre (3b) avec la seconde source de pression (A) à travers le clapet (7) en évitant la traversée du filtre (14).

3. Servomoteur pneumatique suivant la revendication 2, caractérisé en ce que la seconde voie d'admission d'air (151) traverse en permanence le clapet (7) et inclut une section (15b, 15c) commune aux première et seconde voies d'admission d'air (15, 151), les moyens d'obturation (16, 51) à ouverture sélective étant installés sur la section commune (15b, 15c).

4. Servomoteur pneumatique suivant l'une quelconque des revendications précédentes, dans lequel le clapet est commandé par une tige de commande (10), caractérisé en ce que le filtre (14) adopte la forme d'un cylindre enserrant la tige de commande, en ce que les moyens d'obturation comprennent un siège de valve (51) formé à la périphérie interne du piston (5) et un joint annulaire souple (16) obturant un espace libre entre le filtre (14) et le siège de valve (51) en s'appuyant sur ce dernier, et en ce que les moyens élastiques comprennent un ressort (17) appliquant le joint sur le siège de valve, à l'encontre d'une force susceptible d'être exercée sur ce joint par la différence de pression entre l'intérieur du piston et la seconde source de pression.

## Patentansprüche

1. Pneumatischer Servomotor zur Bremsunterstützung unter Anwendung einer ersten und einer zweiten Luftdruckquelle (D, A), die einen ersten bzw. einen zweiten, sich unterscheidenden Druck liefern, wobei dieser Servomotor enthält: ein starres Gehäuse (3), zumindest eine bewegliche, dichte Wand (4), die das starre Gehäuse in zumindest eine erste und eine zweite Kammer (3a, 3b) unterteilt, einen zumindest teilweise zylinderförmigen Pneumatikkolben (5), der in dichter Weise im Gehäuse gleitet und einen Innenraum (50) begrenzt, ein Ventilelement (7), das vom Pneumatikkolben getragen und im Innenraum (50) aufgenommen ist, einen Reinigungsfilter (14), der zwischen der zweiten Quelle (A) und dem Innenraum (50) eingesetzt ist, zumindest einen ersten Lufteinlaß (15), der durch einen Durchgang (15a, 15b, 15c) gebildet ist, welcher die zweite Kammer (3b) mit der zweiten Druckquelle (A) verbindet, Verschließmittel (16, 51) zum selektiven Öffnen, die am ersten Lufteinlaß (15) angeordnet sind, und Federmittel (17), die den Verschließmitteln (16, 51) zugeordnet sind, wobei die erste Kammer (3a) mit der ersten Quelle (D) verbunden ist, wobei die zweite Kammer (3b) durch das Ventilelement (7) selektiv mit einer der beiden Quellen (D, A) verbindbar ist, und wobei die bewegliche Wand mit einer durch Betätigung des Ventilelements bewirkten Druckdifferenz zwischen den an den Kammern angelegten Drücken beaufschlagbar ist, um den Pneumatikkolben (5) mitzunehmen, dadurch gekennzeichnet, daß der erste Lufteinlaß (15) den Durchtritt durch den Filter (14) und durch das Ventilelement (7) umgeht, daß die Verschließmittel zwischen der zweiten Druckquelle (A) und dem Innenraum (50) des Druckluftkolbens angeordnet sind und daß die Federmittel (17) auf einen Druckabbau reagieren, der zwischen zumindest einem Teil des Innenraums (50) des Kolbens und der zweiten Druckquelle (A) entsteht, um selektiv das Öffnen der Verschließmittel (16, 51) dann zu gestatten, wenn dieser Druckabbau einen bestimmten Schwellenwert übersteigt.

2. Pneumatischer Servomotor nach Anspruch 1, dadurch gekennzeichnet, daß er ferner einen zweiten Lufteinlaß (150, 151) enthält, der durch einen Durchgang (7, 50, 16-51) gebildet ist, welcher durch das Ventilelement (7) die zweite Kammer (3b) selektiv mit der zweiten Druckquelle (A) verbindet, indem er den Durchtritt durch den Filter (14) umgeht.

3. Pneumatischer Servomotor nach Anspruch 2, dadurch gekennzeichnet, daß der zweite Lufteinlaß (151) das Ventilelement (7) permanent durchdringt und einen Querschnitt (15b, 15c) einschließt, der dem ersten und dem zweiten Lufteinlaß (15, 151) gemein ist, wobei die Verschließmittel (16, 51) zum selektiven Öffnen am gemeinsamen Querschnitt (15b, 15c) angeordnet sind.

4. Pneumatischer Servomotor nach einem der vorhergehenden Ansprüche, wobei das Ventilelement durch eine Steuerstange (10) gesteuert wird, dadurch gekennzeichnet, daß der Filter (14) die Form eines die Steuerstange umschließenden Zylinders annimmt, daß die Verschließmittel einen Ventilsitz (51), der am Innenumfang des Kolbens (5) gebildet ist, und eine nachgiebige Ringdichtung (16) enthalten, die einen Freiraum zwischen dem Filter (14) und dem Ventilsitz (51) verschließt, indem sie am letztgenannten anliegt, und daß die Federmittel eine Feder (17) enthalten, welche die Dichtung an den Ventilsitz andrückt, und zwar gegen eine Kraft, die durch die Druckdifferenz zwischen dem Innenraum des Kolbens und der zweiten Druckquelle auf diese Dichtung ausgeübt werden kann.

## Claims

1. Pneumatic brake booster using first and second sources of air pressure (D, A) delivering first and second respective and different pressures, this booster comprising: a rigid casing (3); at least one leaktight moving partition (4) dividing the rigid casing into at least a first and a second chamber (3a, 3b); an at least partially cylindrical pneumatic piston (5) sliding in leaktight fashion in the casing and delimiting an internal volume (50); a valve (7) borne by the pneumatic piston and housed in the internal volume (50); a purification filter (14) interposed between the second source (A) and the internal volume (50); at least one first air intake path (15) formed by a passage (15a, 15b, 15c) which makes the second chamber (3b) communicate with the second source of pressure (A); shut-off means (16, 51) with selective opening which are installed on the first air intake path (15) ; and elastic means (17) associated with the shut-off means (16, 51); the first chamber (3a) being connected to the first source (D), it being possible for the second chamber (3b) to be connected selectively, by means of the valve (7), to either one of the two sources (D, A), and it being possible for the moving partition to be urged by a difference in pressure brought about by actuation of the valve, between the pressures supplied to the chambers, in order to drive along the pneumatic piston (5), characterized in that the first air intake path (15) avoids passing through the filter (14) and the valve (7), in that the shut-off means are installed between the second source of pressure (A) and the internal volume (50) of the pneumatic piston, and in that the elastic means (17) are sensitive to a drop in pressure appearing between at least part of the internal volume (50) of the piston and the second source of pressure (A) in order to allow selectively the opening of the shut-off means (15, 51) when this drop in pressure exceeds a given threshold.

2. Pneumatic booster according to claim 1, characterized in that it further includes a second air intake path (150, 151) formed by a passage (7, 50, 16-51) which causes the second chamber (3b) to communicate selectively with the second source of pressure (A) through the valve (7), avoiding passing through the filter (14).

3. Pneumatic booster according to claim 2, characterized in that the second air intake path (151) permanently passes through the valve (7) and includes a section (15b, 15c) common to the first and second air intake paths (15, 151), the shut-off means (16, 51) with selective opening being installed on the common section (15b, 15c).

4. Pneumatic booster according to any one of the preceding claims, in which the valve is operated by an operating rod (10), characterized in that the filter (14) adopts the shape of a cylinder fitted around the operating rod, in that the shut-off means comprise a valve seat (51) formed at the internal periphery of the piston (5) and a flexible annular seal (16) closing off a gap between the filter (14) and the valve seat (51), bearing on the latter, and in that the elastic means comprise a spring (17) pressing the seal onto the valve seat, against a force which can be exerted on this seal by the difference in pressure between the inside of the piston and the second source of pressure.
